# EUROPÄISCHE PATENTSCHRIFT

(11) **EP 2 976 285 B1**
(45) Veröffentlichungstag und Bekanntmachung des Hinweises auf die Patenterteilung: **21.06.2017**
(21) Anmeldenummer: 14704548.8
(22) Anmeldetag: 04.02.2014
(51) Int. Cl.: B66C 15/00, B66C 15/06, B66D 1/58, B66B 5/14

(54) **ÜBERLASTSCHUTZVORRICHTUNG FÜR SEILSTRÄNGE**
OVERLOAD PROTECTION DEVICE FOR CABLE STRANDS
DISPOSITIF DE PROTECTION POUR BRINS DE CÂBLE

(30) Priorität: 21.03.2013 DE 102013205000
(43) Veröffentlichungstag der Anmeldung: 27.01.2016
(73) Patentinhaber: M.A.T. Malmedie Antriebstechnik GmbH, 42653 Solingen (DE)
(72) Erfinder: LAUTWEIN, Christof, 51598 Friesenhagen (DE); SPURA, Christian, 59063 Hamm (DE); WAGENER, Christoph, 47608 Geldern (DE)
(74) Vertreter: Lippert Stachow Patentanwälte Rechtsanwälte
(86) Internationale Anmeldenummer: PCT/EP2014/052119
(87) Internationale Veröffentlichungsnummer: WO 2014/146822

(56) Entgegenhaltungen:
- WO-A1-92/15000
- CN-A- 101 402 439
- JP-A- S5 164 255
- JP-A- S6 443 494
- JP-A- H05 178 582
- JP-A- 2000 127 540
- JP-U- S5 592 695
- US-A- 3 918 301
- US-A- 3 936 622

## Beschreibung

Die Erfindung betrifft eine Überlastschutzvorrichtung für Seilstränge, insbesondere bei Kränen, mit mindestens einer elektronischen Überlastsicherung.

Die europäischen Normen schreiben vor, dass an allen kraftbetriebenen Hubwerken Überlastsicherungen vorhanden sein müssen. Eine Krankonstruktion ist im Allgemeinen für eine bestimmte zulässige maximale Last ausgelegt. Eine Überschreitung dieser zulässigen Maximallast kann zu einer erheblichen Gefährdung der Kranbestandteile (Krankonstruktion, Seile, Seilaufhängungen etc.) führen und dauerhafte Schäden an der gesamten Krankonstruktion sowie Folgeschäden hervorrufen. Daher besitzen Kräne in der Regel mindestens eine elektronische Überlastsicherung, welche bei einem Überschreiten der zulässigen Last den Kranbetrieb abschaltet.

Elektronische Überlastsicherungen berücksichtigen allerdings nur die am Kran hängende Last. Dies bedeutet, dass beim Abschalten der Antriebe unter Umständen eine Überlast an dem jeweiligen Kran hängen kann, sodass Schäden an dem Kran durch diese Überlast nicht ausgeschlossen werden können.

Überlastschutzvorrichtungen der eingangs genannten Art sind aus den Druckschriften US 3,936,622 A, US 3,918,301 A, JP 51-64255 A, JP 55-92695 U und WO 92/15000 A1 bekannt. Aus diesen fünf Druckschriften geht auch hervor, dass zusätzlich zu der elektronischen Überlastsicherung eine mechanische Überlastsicherung vorgesehen sein kann und dass die Überlastschutzvorrichtung in den Seilstrang integriert oder am Seilfestpunkt angeordnet ist. Derartige Überlastschutzvorrichtungen bieten jedoch noch keinen absoluten, zuverlässigen Schutz gegen die verschiedensten Arten einer Überlast.

Der Erfindung liegt daher die Aufgabe zugrunde, eine Überlastschutzvorrichtung zu schaffen, die bei Kränen jegliche Art von Schäden vermeidet, die durch eine Überlast verursacht werden können.

Erfindungsgemäß wird diese Aufgabe durch den Gegenstand des Anspruchs 1 gelöst.

Durch die Erfindung wird also insbesondere eine sichere Überlastschutzvorrichtung für Seilstränge bereitgestellt, welche erst bei Überschreitung einer zulässigen Seilzugkraft anspricht und dann eine Seilverlängerung bewirkt.

Der Grundgedanke der Erfindung besteht darin, nicht nur die Antriebe bei Überschreitung einer vorgegebenen zulässigen Maximallast abzuschalten, sondern darüber hinaus den Seilstrang und somit das Lastseil bei Überschreitung der zulässigen Maximallast zu entlasten und zusätzlich den Seilstrang zu verlängern. Übersteigt die angehängte Last den zulässigen Maximalwert, so erfolgt ein Ausrücken des Überlastschutzes, wodurch das Seil um einen definierten Weg verlängert wird. Dies führt dazu, dass die Überlast nicht von der Krankonstruktion aufgenommen werden muss, wodurch eine Schädigung der Krankonstruktion durch Überlast verhindert wird. Gleichzeitig erfolgt mit dem Ausrücken der Überlastschutzeinrichtung ein elektronisches Signal, welches ein Abschalten des Kranbetriebes bewirkt.

Aus der JP 2000-127540 A ist eine Vorrichtung zur Vermeidung von Stößen bekannt, wobei ein beweglicher Schaft sowohl durch eine mechanische Druckfeder als auch durch einen Magneten zurückgehalten werden kann. In dieser Druckschrift ist jedoch keine elektronische Überlastsicherung im Sinne der technischen Lehre des Anspruchs 1 offenbart. Der aus dieser Druckschrift bekannte elektrische bzw. elektronische Lastsensor hat als Ziel, den elektrischen Strom zum Elektromagneten zu steuern bzw. zu regulieren.

Weitere vorteilhafte Ausgestaltungen des Anmeldungsgegenstandes ergeben sich aus den Unteransprüchen.

Die Überlastschutzeinrichtung kann ein einseitig geschlossenes Gehäuse aufweisen, in welchem ein Lastbolzen längsverschieblich geführt ist. Im Normalbetrieb, also bei Normallast, ist der Lastbolzen in dem Gehäuse mittels einer Hubkraftbegrenzungseinrichtung fixiert. An seinem der geschlossenen Seite des Gehäuseinnenraums zugewandten Ende weist der Lastbolzen einen in dem Innenraum geführten Kolben auf. Das vom Kolben abgewandte Ende des Schaftes ist dabei von außen zugänglich und kann mit dem Seilstrang verbunden-werden. Bei Überschreitung der zulässigen Seilzugkraft kann der Lastbolzen durch die Hubkraftbegrenzungseinrichtung zur offenen Seite des Gehäuses hin freigegeben werden.

Der Schaft des Lastbolzens ist zweckmäßig durch fest in dem Gehäuseinnenraum angeordnete Einbauten längsverschieblich geführt.

Als Einbauten in dem Innenraum des Gehäuses sind vorzugsweise zwei im Abstand voneinander angeordnete Muttern mit Außengewinde vorgesehen, die in entsprechende Gewindeabschnitte des Innenraums eingeschraubt sind und in Axialrichtung an Gehäuseabsätzen anliegen, wobei die Muttern mittige Bohrungen zur Führung des Schaftes des Lastbolzens aufweisen.

Vorzugsweise ist zwischen der näher zu der geschlossenen Seite des Innenraums des Gehäuses angeordneten Mutter und dem Kolben des Lastbolzens eine Druckfeder angeordnet. Bei einer auftretenen Überlast und der damit verbundenen Auslösung der Überlastschutzeinrichtung wird bei Freigabe des Lastbolzens die Seillast von der Feder aufgenommen. Dadurch wird die Feder zusammengedrückt, bewirkt die beabsichtigte Seilverlängerung und entlastet damit den Seilstrang. Dadurch wird die vorhandene Überlast kompensiert. Der durch die Feder realisierbare Federweg kann durch entsprechende Konstruktion der Feder sowie deren Federkonstante bestimmt werden. Somit bestimmt die Feder die Hubgeschwindigkeit sowie den Hubweg.

Die Druckfeder kann als Schraubenfeder ausgebildet sein.

Alternativ kann die Druckfeder auch ein Tellerfederpaket sein, welches entsprechend den vorgegebenen Bedingungen auszulegen ist.

Gemäß einem ersten Ausführungsbeispiel weist die als Überlastschutz dienende Hubkraftbegrenzungseinrichtung eine mechanische Konstruktion auf. Die Auslösung des Überlastschutzes kann mit Hilfe von mechanischen Gleitflächen-Ausrückelementen, mechanischen Überlastelementen, mechanischen Sicherheitselementen oder dergleichen erfolgen. Vorzugsweise sind als Hubkraftbegrenzungseinrichtung federbelastete Kugeln oder mit runden Enden versehene Bauelemente vorgesehen, die in entsprechende Vertiefungen des Schaftes des Lastbolzens eingreifen und diesen fixieren. Die Kugeln oder Bauelemente können dann bei Überschreiten einer vorgegebenen, auf den Lastbolzen ausgeübten maximal zulässigen Zugkraft aus den Vertiefungen des Schaftes verdrängt werden, wodurch der Lastbolzen freigeben wird.

Alternativ kann als Hubkraftbegrenzungseinrichtung am geschlossenen Ende des Gehäuseinnenraums ein auf den magnetisierbaren Kolben des Lastbolzens wirkender, fest mit dem Gehäuse verbundener Haltemagnet in Form eines Dauer- oder Elektromagneten angeordnet sein, wobei der Haltemagnet bei Überschreiten einer vorgegebenen, auf den Lastbolzen ausgeübten Zugkraft diesen freigibt.

Als Hubkraftbegrenzungseinrichtung sind weitere Varianten möglich. Beispielsweise können zwei Druckringe vorgesehen sein, von denen mindestens einer eine umlaufende Schrägfläche aufweist, wobei der Lastbolzen im Bereich der Druckringe mit einer Auflaufschräge versehen ist und zwischen der Schrägfläche der Druckringe und der Auflaufschräge des Lastbolzens über den Umfang verteilt angeordnete Kugeln vorgesehen sind. Die Kugeln können bei Lastüberschreitung mittels der Auflaufschräge des Lastbolzens nach außen gedrückt werden, wodurch mindestens einer der Druckringe entgegen der Kraft einer ersten Druckfeder in Längsrichtung des Lastbolzens verschoben wird. Dadurch wird der Lastbolzen freigegeben und kann sich entgegen der Kraft einer zweiten Druckfeder aus dem Gehäuse herausbewegen.

Im mittleren Bereich des Innenraums des Gehäuses ist vorzugsweise eine mit Außengewinde versehene Mutter in ein im Innenraum vorgesehenes Innengewinde eingeschraubt und in ihrer Lage fixiert. Diese Mutter kann dadurch als Fixpunkt für die Druckfedern wirken, wobei die erste Druckfeder zwischen der Mutter und dem oberen Druckring und die zweite Druckfeder zwischen einem nah dem geschlossenen Ende des Gehäuses an dem Lastbolzen vorgesehenen, in dem Innenraum des Gehäuses geführten Kolben angeordnet sein.

Um eine bequeme Montage ermöglichen zu können, kann das Gehäuse an seinem verschlossenen Ende einen entfernbaren Deckel aufweisen. Ferner kann der Kolben lösbar an dem Ende des Lastbolzens befestigt sein, sodass dieser erst nach der Montage der übrigen Einzelteile an dem Lastbolzen befestigt wird.

Die elektronische Überlastsicherung kann im Innenraum des Gehäuses im Bereich des Kolbens des Lastbolzens angeordnet sein und kann durch eine Verschiebung des Kolbens in Richtung auf das offene Ende des Gehäuseinnenraums ausgelöst werden, wenn der Lastbolzen durch das Ansprechen der Hubkraftbegrenzungseinrichtung freigegeben wird.

Die elektronische Überwachungseinrichtung kann alternativ auch im Innenraum des Gehäuses im Bereich des verschiebbaren Druckrings angeordnet sein, wobei durch eine Verschiebung des Druckrings in Richtung auf das geschlossene Ende des Gehäuseinnenraums ein Auslösen der elektronischen Überwachungseinrichtung erfolgt.

Nach Beseitigung der Überlast bewirkt die Druckfeder, die den an dem Lastbolzen vorgesehenen Kolben beaufschlagt, eine selbständige Rücksetzung der Hubkraftbegrenzungseinrichtung.

Die Erfindung ist in der Zeichnung beispielhaft veranschaulicht und im Nachstehenden im Einzelnen anhand der Zeichnung beschrieben. Es zeigen:
- Fig. 1:: einen Schnitt durch ein erstes Ausführungsbeispiel einer Überlastschutzvorrichtung im Normalbetrieb eines Krans,
- Fig. 2:: den gleichen Schnitt wie Fig. 1 für den Überlastfall, bei dem eine Seilverlängerung bewirkt wird,
- Fig. 3:: ein zweites Ausführungsbeispiel einer Überlastschutzvorrichtung im Normalbetrieb des Krans,
- Fig. 4:: ein drittes Ausführungsbeispiel einer Überlastschutzvorrichtung im Normalbetrieb des Krans und
- Fig. 5:: ein viertes Ausführungsbeispiel einer Überlastschutzvorrichtung im Normalbetrieb des Krans.

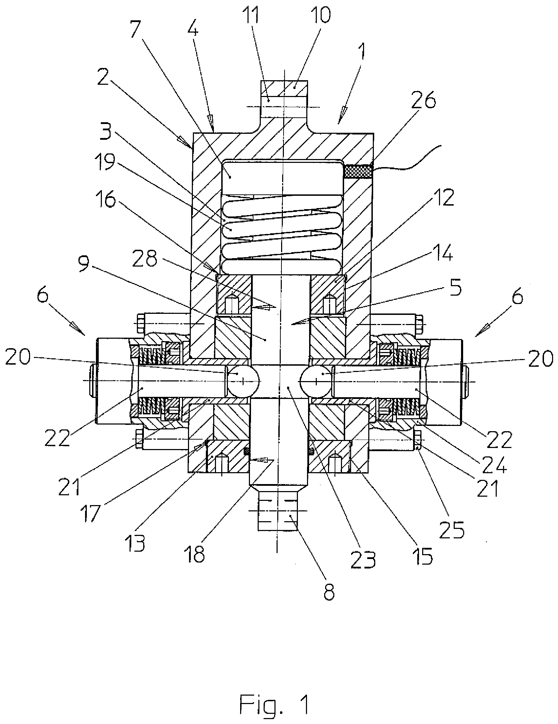

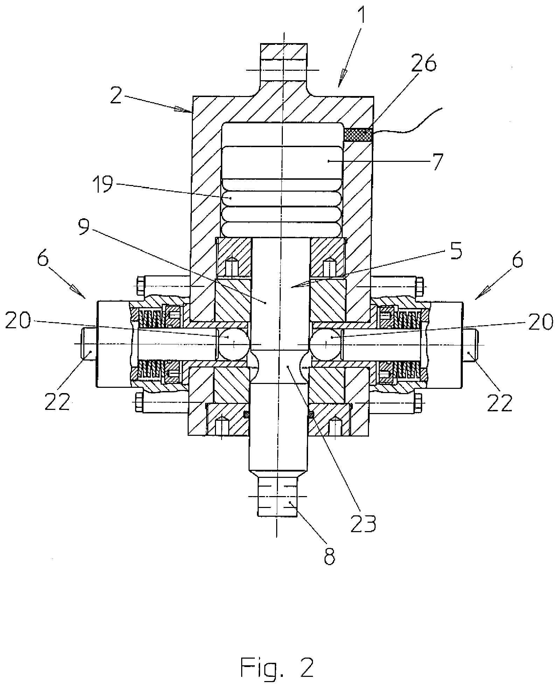

Nach Fig. 1 und 2 der Zeichnung besteht eine Überlastschutzeinrichtung 1 im Wesentlichen aus einem stabilen Gehäuse 2, vorzugsweise aus Stahl, welches einen mittigen Innenraum 3 aufweist. Das Gehäuse 2 ist an seiner in der Zeichnung oberen Seite 4 geschlossen und nach unten hin offen.

In dem Gehäuse 2 ist ein Lastbolzen 5 längsverschieblich geführt. Im Normalbetrieb, wenn also die am Seil hängende Last im zulässigen Bereich liegt, ist der Lastbolzen 5 vorzugsweise mittels zweier, auf gegenüberliegenden Seiten des Gehäuses angeordneten Hubkraftbegrenzungseinrichtungen 6 fixiert, d.h., dass der Lastbolzen 5 relativ zu dem Gehäuse 2 fixiert ist. Alternativ können auch mehrere über den Umfang des Gehäuses verteilt angeordnete Hubkraftbegrenzungseinrichtungen 6 vorgesehen sein.

Auf seinem der geschlossenen Seite 4 des Innenraums 3 zugewandten Ende weist der Lastbolzen 5 einen Kolben 7 auf, der an den Wänden des Innenraums 3 des Gehäuses 2 geführt ist. Im vorliegenden Fall ist der Bereich, über den der Kolben 7 verschieblich ist, zylindrisch ausgebildet.

Das vom Kolben 7 abgewandte Ende 8 des Schaftes 9 des Lastbolzens 5 ist von außen zugänglich und wird mit dem in der Zeichnung nicht dargestellten Seilstrang des jeweiligen Krans verbunden.

Das in der Zeichnung oben dargestellte äußere Ende 10 des Gehäuses 2 weist eine Querbohrung 11 auf, mit der das Gehäuse 2 am Festlager des Seilstrangs angebracht wird.

Bei Überschreitung der maximal zulässigen Seilzugkraft wird der Lastbolzen 5 durch die Hubkraftbegrenzungseinrichtungen 6 freigegeben und verschiebt sich in der Zeichnung nach unten zur offenen Seite des Gehäuses 2 hin.

Der Schaft 9 des Lastbolzens 5 ist im Innenraum 3 durch Einbauten längsverschieblich geführt. Bei dem in Fig. 1 und 2 dargestellten Ausführungsbeispiel bestehen diese Einbauten aus zwei im Abstand voneinander angeordneten Muttern 12 und 13, die mit Außengewinde versehen und in entsprechende Gewindeabschnitte 14 und 15 des Innenraums 3 eingeschraubt sind. Die Gewindeabschnitte 14 und 15 weisen an ihren in der Zeichnung oberen Enden Absätze 16 und 17 auf, gegen die die Muttern 12 und 13 geschraubt sind.

Die Muttern 12 und 13 weisen mittige Bohrungen 18 auf, in denen der Schaft 9 des Lastbolzens 5 geführt ist.

Zwischen der oberen Mutter 12 und dem Kolben 7 des Lastbolzens 5 ist eine Schraubenfeder 19 angeordnet. Wenn die Hubkraftbegrenzungseinrichtungen 6 bei Überschreitung der zulässigen Seilzugkraft den Lastbolzen 5 freigeben und sich dieser ein Stück aus dem Gehäuse 2 herausbewegt, drückt der Kolben 7 des Lastbolzens 5 die Feder 19 zusammen.

Die auf gegenüberliegenden Seiten des Gehäuses 2 angeordneten Hubkraftbegrenzungseinrichtungen 6 bestehen aus je einer Kugel 20, die in einer bis nahe an den Schaft 9 des Lastbolzens 5 heranreichenden Hülse 21 geführt ist. Mittels je eines federbelasteten Bolzens 22 werden die Kugeln 20 in Richtung auf den Schaft 9 des Lastbolzens 5 gedrückt. Die beiden Kugeln 20 greifen dabei in eine in dem Schaft 9 ausgebildete Ringnut 23 ein, wodurch der Schaft 9 in Axialrichtung fixiert wird. Die auf die Kugeln 20 wirkende Federkraft ist dabei so eingestellt, dass der Lastbolzen 5 bei Erreichen der maximal zulässigen, auf den Seilstrang wirkenden Zugkraft die Kugeln 20 aus der Nut 23 verdrängt, sodass sich das untere Ende 8 des Lastbolzens 6, welches mit dem Seilstrang verbunden ist, aus dem Gehäuse 2 heraus bewegen kann und dadurch das Seil verlängert.

Die federbelasteten Bolzen 22 der Hubkraftbegrenzungseinrichtungen 6 sind quer zu dem Lastbolzen 5 angeordnet und in je einer Halterung 24 gelagert, die mittels Schrauben 25 seitlich an dem Gehäuse 2 der Überlastschutzeinrichtung 1 befestigt sind.

Zusätzlich ist eine elektronische Überwachungseinrichtung 26 nahe der verschlossenen Seite 4 des Gehäuses 2 angeordnet. Wenn sich im Überlastfall der Kolben 7 in Richtung zum offenen Ende des Gehäuses 2 bewegt, wird mittels der elektronischen Überwachungseinrichtung 26 eine Unterbrechnung des Kranbetriebs ausgelöst. Hierdurch wird zusätzlich sichergestellt, dass beim Ansprechen der Hubkraftbegrenzungseinrichtungen 6 der Kranbetrieb abgeschaltet wird bzw. nur noch ein Herablassen der Last möglich ist.

Wird die Überlast herabgelassen und wird der Seilstrang entlastet, so wird über die in dem Gehäuse 2 angeordnete Schraubenfeder 19 der Lastbolzen 5 in seine in Fig. 1 dargestellte Ausgangslage zurückgedrückt. Gleichzeitig erfolgt eine selbstständige Rücksetzung der federbelasteten Kugeln 20 der Hubkraftbegrenzungseinrichtungen 6, sodass die Überlastschutzeinrichtung 1 wieder voll funktionsfähig ist und der Kranbetrieb ohne irgendwelche zusätzlichen Einstellungen wieder aufgenommen werden kann.

Die erfindungsgemäße Überlastschutzvorrichtung kann auch mit einer am Kran bzw. am Lastaufnahmemittel vorhandenen elektronischen Überlastsicherung, wie z.B. einem Lastmessbolzen, kombiniert werden. Der sich dadurch ergebende zusätzliche Vorteil besteht darin, dass zwei unabhängig voneinander funktionierende Überwachungssysteme den Seilstrang und damit die Krankonstruktion überwachen.

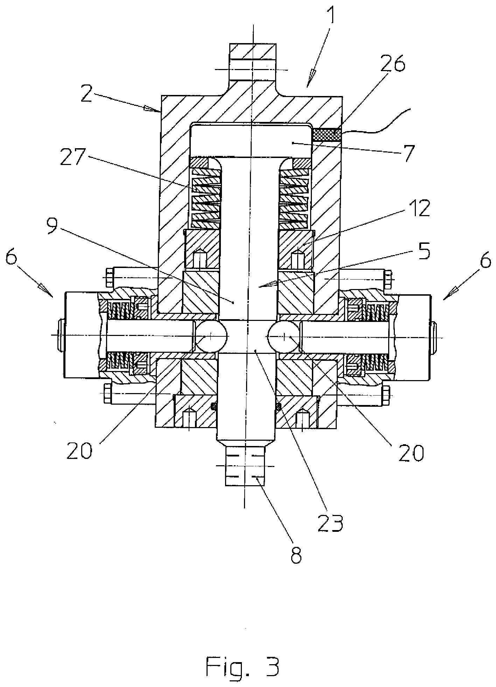

Bei dem in Fig. 3 dargestellten Ausführungsbeispiel stimmen die wesentlichen Bauteile mit denen des in Fig. 1 und 2 dargestellten Ausführungsbeispiele der Überlastschutzeinrichtung 1 überein, wobei für identische Bauteile die gleichen Positionszahlen verwendet worden sind.

Der einzige Unterschied zu der in Fig. 1 und 2 dargestellten Konstruktion besteht darin, dass anstelle der Schraubenfeder 19 zwischen der Mutter 12 und dem Kolben 7 des Lastbolzens 5 ein Tellerfederpaket 27 angeordnet ist, welches die gleiche Wirkung und Funktion hat wie die Schraubenfeder 19.

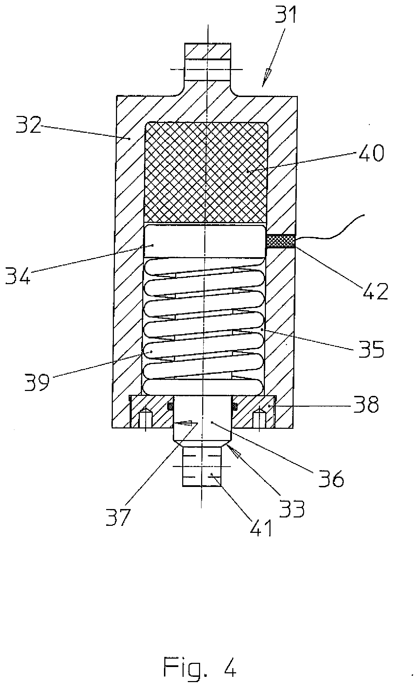

Bei dem in Fig. 4 dargestellten Ausführungsbeispiel ist anstelle der in Fig. 1 bis 3 dargestellten mechanischen Hubkraftbegrenzungseinrichtungen 6 eine magnetische Überlastschutzeinrichtung 31 vorgesehen.

Die Gesamtanordnung der Überlastschutzeinrichtung 31 besteht ebenso wie bei den in Fig. 1 bis 3 dargestellten Ausführungsbeispielen aus einem einseitig offenen Gehäuse 32 sowie einem in dem Gehäuse axial verschieblich geführten Lastbolzen 33. Der Kolben 34 des Lastbolzens 33 ist in dem zylindrischen Innenraum 35 des Gehäuses 32 geführt, während der Schaft 36 des Lastbolzens 33 in einer Bohrung 37 einer Mutter 38 verschieblich gelagert ist, die mit einem Außengewinde in das offene Ende des Gehäuses 32 eingeschraubt ist.

Zwischen der Mutter 38 und dem Kolben 34 des Lastbolzens 33 ist eine Druckfeder 39 vorgesehen, die den Kolben 34 in Richtung zu dem verschlossenen Ende des Gehäuses 32 gegen einen Magneten 40 drückt. Der Magnet 40 kann ein Dauermagnet oder auch ein Elektromagnet sein.

Im Normalbetrieb der Krananlage, wenn also die maximal zulässige Last nicht erreicht wird, wird der Kolben 34 des Lastbolzens 33 fest an dem Magneten 40 gehalten. Erst wenn in dem Seilstrang die Zugkraft den maximal zulässigen Wert übersteigt und die Überlast auf das Befestigungsende 41 des Lastbolzens 33 überträgt, überwindet der Kolben 34 die Anziehungskraft des Magneten 40 und bewegt sich gegen die Kraft der Druckfeder 39 in Richtung auf das offene Ende des Gehäuses 32, wodurch eine Seilverlängerung bewirkt wird.

Ebenso wie bei den in Fig. 1 bis 3 dargestellten Ausführungsbeispielen ist auch bei dem in Fig. 4 dargestellten Ausführungsbeispiel eine elektronische Überwachungseinrichtung 42 vorgesehen, die durch die Bewegung des Kolbens 34 in Richtung auf das offene Ende des Gehäuses 32 aktiviert wird und den Antrieb des Krans ausschaltet.

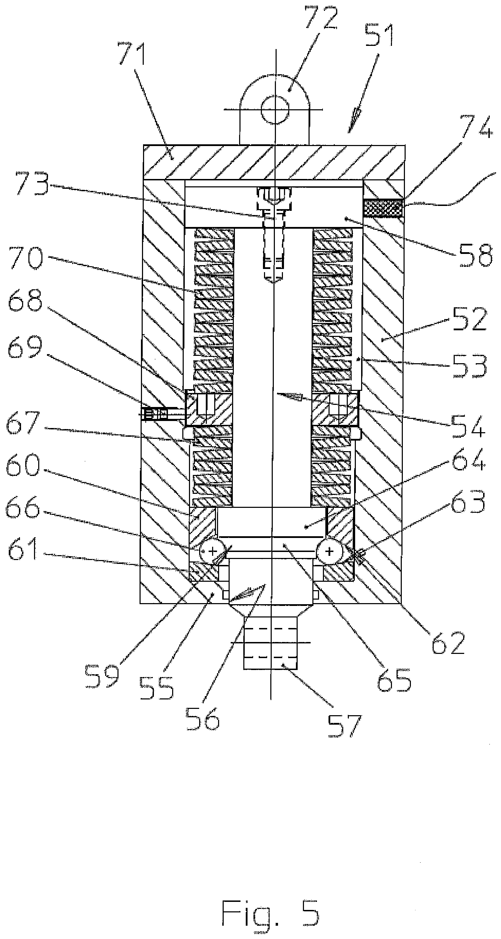

Bei dem in Fig. 5 dargestellten Ausführungsbeispiel besteht die Überlastschutzeinrichtung ebenso wie bei den in Fig. 1-4 dargestellten Ausführungsbeispielen aus einem unten offenen Gehäuse 52, in dessen Innenraum 53 ein Lastbolzen 54 axial verschieblich geführt ist. Das in der Zeichnung unten dargestellte Ende des Gehäuses 52 weist einen nach innen gerichteten Flansch 55 mit einer Durchgangsöffnung 56 auf, in der das untere, aus dem Gehäuse 52 herausragende Ende 57 des Lastbolzens 54 geführt ist. An dem entgegengesetzten Ende des Lastbolzens 54 sitzt ebenso wie bei den ersten Ausführungsbeispielen ein Kolben 58, der in dem Innenraum 53 geführt ist.

Als Hubkraftbegrenzungseinrichtung 59 sind zwei Druckringe 60 und 61 vorgesehen, die mit je einer Schrägfläche 62 bzw. 63 versehen sind, wobei sich die beiden Schrägflächen keilförmig in Richtung auf den Lastbolzen 54 öffnen.

Der Lastbolzen 54 ist in dem Bereich der Hubkraftbegrenzungseinrichtung 59 mit einer umlaufenden Verdickung 64 versehen, die an ihrer zur Durchgangsöffnung 56 weisenden Seite eine Auflaufschräge 65 aufweist.

Zwischen den beiden Schrägflächen 62 und 63 der Druckringe 60 und 61 sowie der Auflaufschrägen 65 sind über den Umfang verteilt angeordnete Kugeln 66 vorgesehen.

Der in der Zeichnung untere Druckring 61 liegt gegen den Gehäuseflansch 55 an, während der obere Druckring 60 axial verschieblich in dem Innenraum 53 des Gehäuses 52 gelagert und über eine erste Druckfeder 67 nach oben gegen ein Festlager abgestützt ist. Das Festlager besteht im vorliegenden Fall aus einer im Gehäuseinnenraum 53 angeordneten, mit einem Außengewinde versehenen Mutter 68, die in ein in dem Innenraum 53 vorgesehenes Innengewinde eingeschraubt und mittels einer radial von außen eingedrehten Schraube 69 in ihrer Lage fixiert ist. Die Druckfeder 67 ist in dem in der Zeichnung dargestellten Ausführungsbeispiel als Tellerfederpaket ausgebildet, jedoch könnte diese auch durch eine Schraubenfeder ersetzt werden.

Der Kolben 58 ist gegen die als Festlager wirkende Mutter 68 über eine zweite Druckfeder 70 abgestützt, die in dem in der Zeichnung dargestellten Ausführungsbeispiel als Tellerfederpaket ausgebildet ist. Alternativ könnte auch die zweite Druckfeder 70 als Schraubenfeder ausgebildet sein.

Im Falle einer Lastüberschreitung werden die Kugeln 66 mittels der Auflaufschräge 65 des Lastbolzens nach außen gegen die Druckringe 60 und 61 gedrückt, wodurch sich der obere, axial verschiebliche Druckring 60 entgegen der Kraft der ersten Druckfeder 67 nach oben verschiebt. Wenn die Kugeln 66 ausreichend weit nach außen verdrängt sind, kann die Verdickung 64 des Lastbolzens 54 an den Kugeln 66 vorbeigleiten, sodass der Lastbolzen 54 freigegeben wird. Dieser kann sich dann gegen die Kraft der zweiten Druckfeder 70 in der Zeichnung nach unten verschieben.

Die Montage der Überlastschutzeinrichtung 51 erfolgt im vorliegenden Fall von der geschlossenen Seite des Gehäuses 52 aus. Zu diesem Zweck weist das Gehäuse 52 einen aufgesetzten Deckel 71 auf, der mittels in der Zeichnung nicht dargestellter Schrauben an dem Gehäuse 52 befestigt werden kann. An dem Deckel 71 ist gleichzeitig die Befestigungseinrichtung 72 für die Überlastschutzeinrichtung 51 angebracht.

Zur Erleichterung der Montage ist der Kolben 58 lösbar an dem oberen Stirnende des Lastbolzens 54 befestigbar, sodass zunächst die Einzelteile montiert werden und anschließend der Kolben 58 mittels einer Schraube 73 an dem Lastbolzen 54 befestigt wird. Am Schluss wird dann der Deckel 71 auf das Gehäuse 52 aufgeschraubt.

Als zusätzliche elektronische Überwachungseinrichtung 74 ist ein Sensor vorgesehen, der im Gehäuseinnenraum in Höhe des Kolbens 58 angeordnet ist. Wenn also die Hubkraftbegrenzungseinrichtung 59 anspricht und der Kolben 58 verschoben wird, wird der Kranbetrieb mittels der elektronischen Überwachungseinrichtung 74 abgeschaltet. Alternativ könnte der Sensor auch in Höhe des verschieblichen Druckrings 60 angeordnet sein.

Nach Beseitigung der Überlast wird der Druckring 60 zusammen mit den Kugeln 66 mittels der Druckfeder 67 wieder in seine in der Zeichnung dargestellte Ausgangslage gedrückt, sodass die Hubkraftbegrenzungseinrichtung 59 sofort wieder funktionsfähig ist und der Kranbetrieb fortgeführt werden kann.

Bei den bisher bekannten Konstruktionen trat das Problem auf, dass, wenn die vom Seilstrang aufzunehmende Last größer war als die zulässige Überlast, der Seilstrang und damit auch die gesamte Krankonstruktion mit der auftretenden Überlast belastet wurde. Der Vorteil der erfindungsgemäßen Konstruktion besteht nun insbesondere darin, dass infolge der Lastseilverlängerung eine Entlastung der Krankonstruktion stattfindet. Wird eine Last mittels des Seilstrangs und somit von der Krankonstruktion gehoben und ist diese Last größer als die zulässige Maximallast, wird das Lastseil verlängert, und die Überlast wird erst gar nicht auf die Krankonstruktion übertragen.

### Bezugszeichenliste

- 1: Überlastschutzeinrichtung
- 2: Gehäuse
- 3: Innenraum des Gehäuses 2
- 4: obere Seite
- 5: Lastbolzen
- 6: Hubkraftbegrenzungseinrichtungen
- 7: Kolben
- 8: unteres Ende des Lastbolzens 5
- 9: Schaft
- 10: oberes äußeres Ende des Gehäuses 2
- 11: Querbohrung
- 12: Mutter
- 13: Mutter
- 14: Gewindeabschnitt
- 15: Gewindeabschnitt
- 16: Absatz
- 17: Absatz
- 18: mittige Bohrung
- 19: Schraubenfeder
- 20: Kugeln
- 21: Hülsen
- 22: Bolzen
- 23: umlaufende Nut
- 24: Halterung
- 25: Schrauben
- 26: elektronische Überwachungseinrichtung
- 27: Tellerfederpaket
- 31: Überlastschutzeinrichtung
- 32: Gehäuse
- 33: Lastbolzen
- 34: Kolben
- 35: zylindrischer Innenraum des Gehäuses 32
- 36: Schaft
- 37: Bohrung
- 38: Mutter
- 39: Druckfeder
- 40: Haltemagnet
- 41: Befestigungsende
- 42: elektronische Überwachungseinrichtung

- 51: Überlastschutzeinrichtung
- 52: Gehäuse
- 53: Innenraum
- 54: Lastbolzen
- 55: Flansch
- 56: Durchgangsöffnung
- 57: unteres Ende des Lastbolzens
- 58: Kolben
- 59: Hubkraftbegrenzungseinrichtung
- 60: Druckring
- 61: Druckring
- 62: Schrägfläche des Druckrings 60
- 63: Schrägfläche des Druckring 61
- 64: Verdickung des Lastbolzens 54
- 65: Auflaufschräge der Verdickung 64
- 66: Kugeln
- 67: erste Druckfeder
- 68: Mutter
- 69: Schraube
- 70: zweite Druckfeder
- 71: Gehäusedeckel
- 72: Befestigungseinrichtung
- 73: Schraube
- 74: elektronische Überwachungseinrichtung

## Patentansprüche

1. Überlastschutzvorrichtung für Seilstränge, insbesondere bei Kränen, mit mindestens einer elektronischen Überlastsicherung sowie einer zusätzlich zu der elektronischen Überlastsicherung vorgesehene mechanischen oder magnetischen Überlastschutzeinrichtung (1; 31; 51), die in den Seilstrang integriert oder am Seilfestpunkt angeordnet ist, **dadurch gekennzeichnet, dass** die Überlastschutzvorrichtung bei Überschreitung einer zulässigen Seilzugkraft anspricht und eine Seilverlängerung bewirkt.

2. Überlastschutzvorrichtung nach Anspruch 1, **dadurch gekennzeichnet, dass** die Überlastschutzeinrichtung (1; 31; 51) ein einseitig geschlossenes Gehäuse (2; 32; 52) aufweist, dass in dem Gehäuse (2; 32; 52) ein Lastbolzen (5; 33; 54) längsverschieblich geführt, im Normalbetrieb aber in dem Gehäuse (2; 32; 52) mittels einer Hubkraftbegrenzungseinrichtung (6; 40; 59) fixiert ist, dass der Lastbolzen (5; 33; 54) an seinem der geschlossenen Seite des Gehäuseinnenraums (3; 35; 53) zugewandten Ende einen in dem Innenraum (3; 35; 53) geführten Kolben (7; 34; 58) aufweist, dass das vom Kolben (7; 34; 58) abgewandte Ende des Schaftes (9; 36) von außen zugänglich und mit dem Seilstrang verbindbar ist und dass der Lastbolzen (5; 33; 54) bei Überschreitung der zulässigen Seilzugkraft durch die Hubkraftbegrenzungseinrichtung (6; 40; 59) zur offenen Seite des Gehäuses (2; 32; 52) hin freigegeben wird.

3. Überlastschutzvorrichtung nach Anspruch 2, **dadurch gekennzeichnet, dass** der Schaft (9; 36) des Lastbolzens (5; 33; 54) durch fest in dem Innenraum (3; 35; 53) angeordnete Einbauten längsverschieblich geführt ist.

4. Überlastschutzvorrichtung nach Anspruch 3, **dadurch gekennzeichnet, dass** als Einbauten in dem Innenraum (3) des Gehäuses (2) zwei im Abstand voneinander angeordnete Muttern (12, 13) mit Außengewinde vorgesehen sind, die in entsprechende Gewindeabschnitte (14, 15) des Innenraums (3) eingeschraubt sind und in ihrer Axialrichtung an Gehäuseabsätzen (16, 17) anliegen und dass die Muttern (12, 13) mittige Bohrungen (18) zur Führung des Schaftes (9) des Lastbolzens (5) aufweisen.

5. Überlastschutzvorrichtung nach Anspruch 4, **dadurch gekennzeichnet, dass** zwischen der näher zu der geschlossenen Seite des Gehäuseinnenraums (3) angeordneten Mutter (12) und dem Kolben (7) des Lastbolzens (5) eine Druckfeder angeordnet ist.

6. Überlastschutzvorrichtung nach Anspruch 5, **dadurch gekennzeichnet, dass** die Druckfeder als Schraubenfeder (19) ausgebildet ist.

7. Überlastschutzvorrichtung nach Anspruch 5, **dadurch gekennzeichnet, dass** die Druckfeder als Tellerfederpaket (27) ausgebildet ist.

8. Überlastschutzvorrichtung nach einem der Ansprüche 1 bis 7, **dadurch gekennzeichnet, dass** als Hubkraftbegrenzungseinrichtung (6) federbelastete Kugeln (20) oder mit runden Enden versehene Bauelemente vorgesehen sind, die in entsprechende Vertiefungen (umlaufende Nut 23) des Schaftes (9) des Lastbolzens (5) eingreifen, und dass die Kugeln (20) oder Bauelemente bei Überschreiten einer vorgegebenen, auf den Lastbolzen (5) ausgeübten maximal zulässigen Zugkraft aus den Vertiefungen des Schaftes (9) verdrängt werden und den Lastbolzen (5) freigeben.

9. Überlastschutzvorrichtung nach Anspruch 1, **dadurch gekennzeichnet, dass** als Hubkraftbegrenzungseinrichtung am geschlossenen Ende des Innenraums (35) des Gehäuses (32) ein auf den magnetisierbaren Kolben (34) des Lastbolzens (33) wirkender, fest mit dem Gehäuse (32) verbundener Haltemagnet (40) in Form eines Dauer-oder Elektromagneten angeordnet ist und dass der Haltemagnet (40) bei Überschreiten einer vorgegebenen, auf den Lastbolzen (33) ausgeübten Zugkraft diesen freigibt.

10. Überlastschutzvorrichtung nach Anspruch 1, **dadurch gekennzeichnet, dass** als Hubkraftbegrenzungseinrichtung (59) zwei Druckringe (60, 61) vorgesehen sind, dass mindestens einer der Druckringe (60, 61) eine umlaufende Schrägfläche (62, 63) aufweist, dass der Lastbolzen (54) im Bereich der Druckringe (60, 61) mit einer Auflaufschräge (65) versehen ist, dass zwischen den Schrägflächen (62, 63) der Druckring (60, 61) und der Auflaufschräge (65) des Lastbolzens (54) über den Umfang verteilt angeordnete Kugeln (66) vorgesehen sind, dass die Kugeln (66) bei Lastüberschreitung mittels der Auflaufschräge (65) des Lastbolzens (54) nach außen gedrückt werden und mindestens einen der Druckringe (60) entgegen der Kraft einer ersten Druckfeder (67) in Längsrichtung des Lastbolzens (54) verschieben, wodurch der Lastbolzen (54) freigegeben wird und sich entgegen der Kraft einer zweiten Druckfeder (70) aus dem Gehäuse (52) herausbewegen kann.

11. Überlastschutzvorrichtung nach Anspruch 10, **dadurch gekennzeichnet, dass** im mittleren Bereich des Innenraums (53) des Gehäuses (52) eine mit Außengewinde versehene Mutter (68) in ein im Gehäuseinnenraum (53) vorgesehenes Innengewinde eingeschraubt und in ihrer Lage fixiert ist, dass die erste Druckfeder (67) zwischen der Mutter (68) und dem oberen Druckring (60) und die zweite Druckfeder (70) zwischen einem nahe dem geschlossenen Ende des Gehäuses (52) an dem Lastbolzen (54) vorgesehenen, in dem Gehäuseinnenraum (53) geführten Kolben (58) angeordnet ist.

12. Überlastschutzvorrichtung nach einem der Ansprüche 10 oder 11, **dadurch gekennzeichnet, dass** das Gehäuse (52) an seinem verschlossenen Ende einen entfernbaren Deckel (71) aufweist.

13. Überlastschutzvorrichtung nach einem der Ansprüche 10 bis 12, **dadurch gekennzeichnet, dass** der Kolben (58) lösbar an dem Ende des Lastbolzens (54) befestigt ist.

14. Überlastschutzvorrichtung nach einem der Ansprüche 1 bis 9, **dadurch gekennzeichnet, dass** die elektronische Überwachungseinrichtung (26; 42) im Innenraum (3; 35) des Gehäuses (2; 32) im Bereich des Kolbens (7; 34) des Lastbolzens (5; 33) angeordnet ist und durch eine Verschiebung des Kolbens (7; 34) in Richtung auf das offene Ende des Gehäuseinnenraums (3; 35) ausgelöst wird.

15. Überlastschutzvorrichtung nach einem der Ansprüche 10 bis 13, **dadurch gekennzeichnet, dass** die elektronische Überwachungseinrichtung (74) im Innenraum (53) des Gehäuses (52) im Bereich des verschiebbaren Druckrings (60) angeordnet ist und durch eine Verschiebung des Druckrings (60) in Richtung auf das geschlossene Ende des Innenraums (53) des Gehäuses (52) den Überlastschutz auslöst.

16. Überlastschutzvorrichtung nach einem der Ansprüche 1 bis 15, **dadurch gekennzeichnet, dass** die den Kolben (7; 34; 58) beaufschlagende Druckfeder (19; 27; 39; 70) nach Beseitigung der Überlast eine selbstständige Rücksetzung der Hubkraftbegrenzungseinrichtung bewirkt.

## Claims

1. An overload protection device for cable lines, in particular in cranes, having at least one electronic overload safety means and in addition to the electronic overload safety means there is provided a mechanical or magnetic overload protection device (1; 31; 51), which is integrated into the cable line or arranged at the cable fixing point **characterised in that** the overload protection device responds when a permissible cable tension force is exceeded and implements a cable extension.

2. An overload protection device according to claim 1 **characterised in that** the overload protection device (1; 31; 51) has a housing (2; 32; 52) closed at one side, a load pin (5; 33; 54) is longitudinally slidably guided in the housing (2; 32; 52) but in normal operation is fixed in the housing (2; 32, 52) by means of a stroke force limiting device (6; 40; 59), the load pin (5; 33; 54) at its end towards the closed side of the housing interior (3; 35; 53) has a piston (7; 34; 58) guided in the housing interior (3; 35; 53), the end of the shank (9; 36) remote from the piston (7; 34; 58) is accessible from the exterior and can be connected to the cable line and when the permissible cable tensile force is exceeded the load pin (5; 33; 54) is released by the stroke force limiting device (6; 40; 59) towards the open side of the housing (2; 32; 52).

3. An overload protection device according to claim 2 **characterised in that** the shank (9; 36) of the load pin (5; 33; 54) is longitudinally slidably guided by fitments fixedly arranged in the housing interior (3; 35; 53).

4. An overload protection device according to claim 3 **characterised in that** the fitments in the interior (3) of the housing (2) are two mutually spaced nuts (12, 13) with a male thread, which are screwed into corresponding thread portions (14, 15) of the housing interior (3) and bear in their axial direction against housing steps (16, 17) and the nuts (12, 13) have central bores (18) for guiding the shank (9) of the load pin (5).

5. An overload protection device according to claim 4 **characterised in that** a compression spring is arranged between the nut (12) arranged closer to the closed side of the housing interior (3) and the piston (7) of the load pin (5).

6. An overload protection device according to claim 5 **characterised in that** the compression spring is in the form of a coil spring (19).

7. An overload protection device according to claim 5 **characterised in that** the compression spring is in the form of a plate spring pack (27).

8. An overload protection device according to one of claims 1 to 7 **characterised in that** provided as the stroke force limiting device (6) are spring-loaded balls (20) or components which are provided with round ends and which engage into corresponding recesses (peripherally extending groove 23) in the shank (9) of the load pin (5) and that the balls (20) or components are displaced out of the recesses in the shaft (9) and release the load pin (5) when a predetermined maximum permissible tensile force exerted on the load pin (5) is exceeded.

9. An overload protection device according to claim 1 **characterised in that** arranged as the stroke force limiting device at the closed end of the interior (35) of the housing (32) is a holding magnet (40) in the form of a permanent magnet or an electromagnet, which is connected fixedly to the housing (32) and acts on the magnetisable piston (34) of the load pin (33), and that the holding magnet (40) releases the load pin (33) when a predetermined tensile force exerted on the load pin (33) is exceeded.

10. An overload protection device according to claim 1 **characterised in that** two pressure rings (60, 61) are provided as the stroke force limiting device (59), at least one of the pressure rings (60, 61) has a peripherally extending inclined surface (62, 63), the load pin (54) is provided with a run-on inclined surface (65) in the region of the pressure rings (60, 61), provided between the inclined surfaces (62, 63) of the pressure rings (60, 61) and the run-on inclined surface (65) of the load pin (54) are balls which are arranged distributed over the periphery, the balls (66) are urged outwardly when the load is exceeded by means of the run-on inclined surface (65) of the load pin (54) and at least one of the pressure rings (60) is displaced in the longitudinal direction of the load pin (54) against the force of a first compression spring (67) whereby the load pin (54) is released and can move out of the housing (52) against the force of a second compression spring (70).

11. An overload protection device according to claim 10 **characterised in that** a nut (68) provided with a male thread is screwed into a female thread provided in the housing interior (53) in the central region of the housing interior (53) and is fixed in its position, the first compression spring (67) is arranged between the nut (68) and the upper pressure ring (60) and the second compression spring (70) is arranged between a piston (58) guided in the housing interior (53) and provided near the closed end of the housing (52) on the load pin (54).

12. An overload protection device according to one of claims 10 and 11 **characterised in that** the housing (52) at its closed end has a removable cover (71).

13. An overload protection device according to one of claims 10 to 12 **characterised in that** the piston (58) is releasably fixed to the end of the load pin (54).

14. An overload protection device according to one of claims 1 to 9 **characterised in that** the electronic monitoring device (26; 42) is arranged in the interior (3; 35) of the housing (2; 32) in the region of the piston (7; 34) of the load pin (5; 33) and is triggered by a displacement of the piston (7; 34) in a direction towards the open end of the housing interior (3; 35).

15. An overload protection device according to one of claims 10 to 13 **characterised in that** the electronic monitoring device (74) is arranged in the interior (53) of the housing (52) in the region of the displaceable pressure ring (60) and triggers the overload protection by a displacement of the pressure ring (60) in a direction towards the closed end of the interior (53) of the housing (52).

16. An overload protection device according to one of claims 1 to 15 **characterised in that** the compression spring (19; 27; 39; 70) acting on the piston (7; 34; 58) causes automatic resetting of the stroke force limiting device after the overload is removed.

## Revendications

1. Dispositif de protection contre les surcharges pour brins de câble, notamment dans des grues, comprenant au moins une protection électronique contre les surcharges et en plus de la protection électronique contre les surcharges un dispositif de protection contre les surcharges mécanique ou magnétique (1; 31; 51) intégré dans le brin de câble ou disposé au point de câble fixe, **ca - ractérisé** en ce que le dispositif de protection contre les surcharges réagit lors du dépassement d'une force de traction et effectue une prolongation de la câble.

2. Dispositif de protection contre les surcharges selon la revendication 1, **caractérisé en ce que** le dispositif de protection contre les surcharges comporte un boîtier fermé sur un côté (2; 32; 52), qu'un boulon de charge (5; 33; 54) est guidé de manière à coulisser longitudinalement dans le boîtier (2; 32; 52), mais pendant le fonctionnement normal ledit boulon est fixé dans le boîtier (2; 32; 52) par un limiteur de force de levée (6; 40; 59), que le boulon de charge (5; 33; 54) comporte à son extrémité tournée vers le côté fermé de l'intérieur du boîtier (3, 35; 53) un piston (7; 34; 58) guidé dans l'intérieur (3; 35; 53), que l'extrémité de la tige (9; 36) détournée du piston (7; 34; 58) peut être connectée au brin de câble de manière accessible de l'extérieur, et que le boulon de charge (5; 33; 54) est dégagé vers le côté ouvert du boîtier (2; 32; 52) par le limiteur de force levée (6; 40; 59) lors du dépassement d'une force de tension de la câble.

3. Dispositif de protection contre les surcharges selon la revendication 2, **caractérisé en ce que** la tige (9; 36) du boulon de charge (5; 33; 54) est guidée de manière à coulisser longitudinalement par des éléments encastrés disposés de manière fixe dans l'intérieur (3; 35; 53).

4. Dispositif de protection contre les surcharges selon la revendication 3, **caractérisé en ce que** comme les éléments encastrés dans l'intérieur (3) du boîtier (2) on a prévu deux écrous (12, 13) espacés l'un de l'autre et comportant un filetage extérieur étant vissé dans des parties filetées correspondantes (14, 15) de l'intérieur (3) et s'appliquant contre des épaulements du boîtier (16, 17) dans leur sens axial, et que les écrous (12, 13) présentent des alésages centraux (18) pour guider la tige (9) du boulon de charge (5).

5. Dispositif de protection contre les surcharges selon la revendication 4, **caractérisé en ce qu'**un ressort de compression est disposé entre l'écrou (12) plus proche du côté fermé de l'intérieur du boîtier (3) et le piston (7).

6. Dispositif de protection contre les surcharges selon la revendication 5, **caractérisé en ce que** le ressort de compression est réalisé sous forme de ressort hélicoïdal (19).

7. Dispositif de protection contre les surcharges selon la revendication 5, **caractérisé en ce que** le ressort de compression est réalisé sous forme de paquet de rondelle-ressort (27).

8. Dispositif de protection contre les surcharges selon la revendication 7, **caractérisé en ce qu'**on a prévu comme limiteurs de force de levée (6) des billes à ressort (20) ou des composants munis des extrémités rondes engageant dans des creux correspondants (rainure périphérique 23) de la tige (9) du boulon de charge (5), et que les billes (20) ou les composants sont déplacés des creux de la tige (9) en dégageant le boulon de charge (5) lors du dépassement d'une force de tension maximale admissible prédéterminé et exercée sur le boulon de charge (5).

9. Dispositif de protection contre les surcharges selon la revendication 1, **caractérisé en ce qu'**on a prévu comme limiteurs de force de levée à l'extrémité fermée de l'intérieur (35) du boîtier (32) un aimant de retenue (40) sous la forme d'un aimant permanent ou d'un électro-aimant solidaire du boîtier (32) et agissant sur le piston magnétisable (34) du boulon de charge (33), et que l'aimant de retenue (40) dégage le boulon de charge (33) lors du dépassement d'une force de tension exercée sur celui-ci.

10. Dispositif de protection contre les surcharges selon la revendication 1, **caractérisé en ce qu'**on a prévu comme limiteurs de force de levée (59) deux anneaux de compression (60, 61), que l'un au moins des anneaux de compression (60, 61) présente une surface inclinée circonférentielle (62, 63), que le boulon de charge (54) est muni d'une rampe de démarrage (65) dans la zone des anneaux de compression (60, 61), qu'entre les surfaces inclinées (62, 63) des anneaux de compression (60, 61) et la rampe de démarrage (65) du boulon de charge (54) sont prévus des billes (66) répartis sur la périphérie, que les billes (66) lors d'un dépassement de charge sont poussées vers l'extérieur en déplaçant l'un au moins des anneaux de compression (60) dans la direction longitudinale du boulon de charge (54) à l'encontre de la force d'un premier ressort de compression (67), ce qui dégage le boulon de charge (54) et permet au boulon de mouvoir hors du boîtier (52) à l'encontre de la force du deuxième ressort de compression (70).

11. Dispositif de protection contre les surcharges selon la revendication 1, **caractérisé en ce que** dans la zone centrale de l'intérieur (53) du boîtier (52), un écrou (68) muni d'un filetage extérieur est vissé dans un filetage intérieur prévu à l'intérieur du boîtier (53) et est fixé dans sa position, que le premier ressort de compression (67) est prévu entre l'écrou (68) et l'anneau de compression supérieur (60) et le deuxième ressort de compression (70) est prévu entre un piston (58) prévu près de l'extrémité fermée du boîtier (52) et guidé à l'intérieur du boîtier (53).

12. Dispositif de protection contre les surcharges selon l'une des revendications 10 ou 11, **caractérisé en ce que** le boîtier (52) comporte à son extrémité fermée un couvercle amovible (71).

13. Dispositif de protection contre les surcharges selon l'une des revendications 10 à 12, **caractérisé en ce que** le piston (58) est fixé de manière amovible à l'extrémité du boulon de charge (54).

14. Dispositif de protection contre les surcharges selon l'une des revendications 1 à 9, **caractérisé en ce que** le dispositif de surveillance électronique (26; 42) à l'intérieur (3; 35) du boîtier (2; 32) est arrangé dans la zone du piston (7; 34) du boulon de charge (5; 33) et est déclenché par un déplacement du piston (7; 34) vers l'extrémité ouverte de l'intérieur du boîtier (3; 35).

15. Dispositif de protection contre les surcharges selon l'une des revendications 10 à 13, **caractérisé en ce que** le dispositif de surveillance électronique (74) est arrangé à l'intérieur (53) du boîtier (52) dans la zone de l'anneau de compression déplaçable (60) et déclenche la protection contre les surcharges par un déplacement de l'anneau de compression (60) vers l'extrémité fermée de l'intérieur (53) du boîtier (52).

16. Dispositif de protection contre les surcharges selon l'une des revendications 1 à 15, **caractérisé en ce que** le ressort de compression (19; 27; 39; 70) sollicitant le piston (7; 34; 58) provoque une remise à zéro indépendante du limiteur de la force de levée après l'élimination de la surcharge.
